Europäisches Patentamt

(19) European Patent Office

Office européen des brevets

(11) Numéro de publication: **0 061 155**
**B1**

(12) **FASCICULE DE BREVET EUROPEEN**

(45) Date de publication du fascicule du brevet: **19.06.85**

(51) Int. Cl.⁴: **B 23 K 9/28**

(21) Numéro de dépôt: **82102227.4**

(22) Date de dépôt: **18.03.82**

(54) **Dispositif d'orientation d'un outil.**

(30) Priorité: **20.03.81 FR 8105594**

(43) Date de publication de la demande:
**29.09.82 Bulletin 82/39**

(45) Mention de la délivrance du brevet:
**19.06.85 Bulletin 85/25**

(84) Etats contractants désignés:
**BE CH DE FR GB IT LI SE**

(56) Documents cités:
**DE-A-2 851 063**
**FR-A-2 380 841**

(73) Titulaire: **ALSTHOM-ATLANTIQUE Société Anonyme dite:**
**38, avenue Kleber**
**F-75794 Paris Cédex 16 (FR)**

(72) Inventeur: **Cornu, Jean**
**34, route de Vertou**
**F-44200 Nantes (FR)**

(74) Mandataire: **Weinmiller, Jürgen et al**
**Zeppelinstrasse 63**
**D-8000 München 80 (DE)**

Courier Press, Leamington Spa, England.

EP 0 061 155 B1

## Description

La présente invention concerne un dispositif d'orientation d'un outil selon le préambule de la revendication 1.

En particulier, l'invention s'applique au soudage automatique à l'arc où l'on sait que l'un des paramètres particulièrement influents est l'angle que fait la torche de soudage par rapport à la normale au point d'impact.

Un tel dispositif est connu, par exemple à partir du document DE—A—2 851 063. Cependant, les modifications d'angle de la torche entraînent des modifications des données et instructions de commande tant en position qu'en vitesse de la torche.

L'invention a pour but de proposer un dispositif dans lequel les modifications de la position angulaire de la torche n'ont aucun effet sur la position et la vitesse du point de soudage sur sa trajectoire, lesquelles sont définies par un programme.

L'invention telle qu'elle est caracterisée dans la revendication 1 permet d'atteindre ce but en proposant un mécanisme servant à corriger automatiquement la position de l'outil par rapport au point de soudage.

Selon une réalisation de l'invention, les moyens permettant de faire varier l'angle $\psi$ de façon qu'il reste égal à $\pi-2\alpha$ comportent un premier pignon de rayon R situé coaxialement à l'articulation de la bielle avec le bras orientable et fixe par rapport au bars orientable, un second pignon de rayon 2R situé coaxialement à l'articulation de la bielle avec la poutre et fixe par rapport à la poudre, une chaîne de transmission entourant les deux pignons.

Selon une première forme de l'invention, les moyens pour déplacer ladite poutre par rapport au chariot lorsque l'angle $\alpha$ varie comportent une première biellette comprenant un premier axe d'articulation et un second axe d'articulation, la distance séparant ces deux axes d'articulation étant égale à la distance séparant les axes d'articulation de ladite bielle, une deuxième biellette comprenant un premier axe d'articulation et un deuxième axe d'articulation, la distance séparant ces deux axes étant égale à la distance séparant les deux axes d'articulation de la première biellette, la première articulation de la première biellette étant articulée à ladite poutre au voisinage de sa seconde extrémité, la deuxième articulation de la première biellette étant articulée à la première articulation de la seconde biellette et la seconde articulation de la seconde biellette étant articulée audit chariot, un troisième pignon du rayon R1 coaxial à la première articulation de la première biellette et fixe par rapport à cette première biellette, un quatrième pignon de rayon R1 coaxial à l'articulation de la bielle avec la poutre et fixe par rapport à la bielle, et une chaîne de transmission entourant les troisième et quatrième pignons, la bielle et la première biellette étant réglées parallèlement.

Avantageusement, lesdits moyens permettant de faire varier l'angle $\alpha$ comportent un moteur agissant sur la première biellette de façon à la faire pivoter autour de son premier axe d'articulation.

Selon une seconde forme de réalisation de l'invention, les moyens pour déplacer ladite poutre par rapport au chariot lorsque l'angle $\alpha$ varie comportent un moteur et des moyens de transmission de façon que la rotation du moteur entraîne une translation de la poutre par rapport au chariot, et des moyens de commande du moteur asservissant sa rotation en fonction de la variation de l'angle $\alpha$.

L'invention sera bien comprise à la lumière de la description de deux exemples de réalisation de l'invention faite ci-après en regard du dessin annexé dans lequel:

— La figure 1 donne un représentation schématique d'une première forme de réalisation de l'invention.
— La figure 2 donne un représentation schématique d'une seconde forme de réalisation de l'invention.
— La figure 3 montre une perspective schématique dans laquelle on effectue une rotation autour de l'axe AA'.

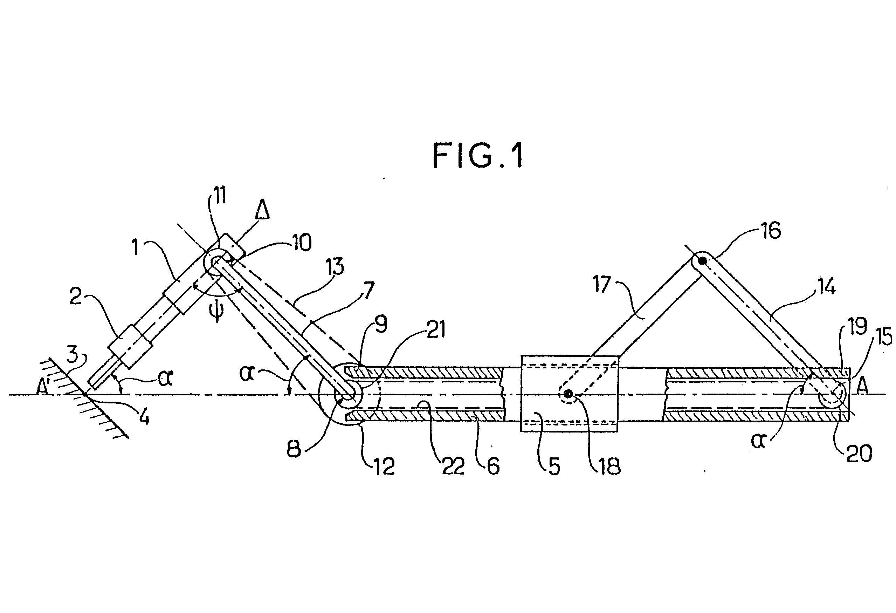

En se reportant à la figure 1, le dispositif selon l'invention comprend un bras orientable 1 portant un outil 2, il s'agit en l'occurrence d'une torche de soudage à l'arc. En 3 est représentée la surface sur laquelle un cordon de soudure est à réaliser, en 4 l'impact de l'arc.

Le bras orientable 1 est relié à un chariot 5 par divers éléments réalisant l'invention. Le chariot 5 fait partie d'une machine à souder et le déplacement du chariot selon une trajectoire donnée et à une vitesse donnée est programmée. Le bras orientable 1 est relié au chariot 5 par l'intermédiaire d'une poutre 6 qui peut coulisser selon son axe AA' dans le chariot 5 et d'une bielle 7. La bielle 7 est articulée à son extrémité 8 à l'extrémité 9 de la poutre 6, et à son extrémité 10, au bras orientable 1. L'angle que fait la bielle 7 avec l'axe AA' est $\alpha$ et l'angle que fait la bielle 7 avec le bras orientable 1 est $\psi$.

La bras orientable 1 comprend un premier pignon 11 de rayon R. Ce pignon est coaxial à l'articulation de la bielle 7 avec le bras orientable 1 et est fixe par rapport à ce bras. L'extrémité 9 de la poutre 6 comporte un deuxième pignon 12 de rayon 2R coaxial à l'articulation de la poutre 6 avec la bielle 7 et fixe par rapport à la poutre 6. Une chaîne 13 entoure et relie les pignons 11 et 12. De cette façon en réglant au départ l'angle $\psi$ à une valeur égale à $\pi-2\alpha$, toute variation de l'angle $\alpha$ entraînera une variation de l'angle $\psi$ d'une valeur égale au double de la variation de l'angle $\alpha$ et l'angle $\psi$ restera ainsi toujours égal à $\pi-2\alpha$. Il s'en suit que l'angle compris entre l'axe AA' et le bras orientable 1 est égal à $\alpha$. On a donc réalisé un triangle isocèle. Si donc l'angle $\alpha$ varie, le point d'intersection de l'axe du bras orientable 1 avec l'axe AA' parcourt l'axe AA' et s'éloigne donc du point d'impact 4, l'invention comprend donc des moyens pour translater la poutre 6 de façon à ramener ce point d'intersection au point 4.

Ce moyens comportent une première biellette 14 comportant une première articulation 15 et une deuxième articulation 16, une deuxième biellette 17 articulée à la deuxième articulation 16 de la première biellette 14 et au chariot 5 en 18. La première articulation 15 de la première biellette 14 est articulée à l'extrémité 19 de la poutre 6. Les biellettes 14 et 17 ont des longueurs égales à la bielle 7. La biellette 14 comporte un troisième pignon 20 coaxial à son articulation avec la poutre 6 et fixe par rapport à la biellette 14; de même, la bielle 7 comporte un quatrième pignon 21 coaxial à son articulation avec la poutre 6 et fixe par rapport à la bielle 7. Une chaîne 22 entoure et relie les deux pignons 20 et 21 en passant à l'intérieur de la poutre 6 qui est creuse.

Bien entendu, les pignons 11, 12, 20 et 21 et les chaînes 13 et 22 peuvent être remplacées par tout autre moyen de transmission du mouvement.

Au départ, la bielle 7 et la biellette 14 sont placées parallèlement de manière à réaliser deux triangles isocèles égaux.

Un moteur non représenté, agit sur commande pour faire varier l'angle α. Ce moteur agit sur la bielle 14. Toute modification de l'angle α agit donc sur la longueur séparant les articulations 18 et 15 d'une valeur égale à la variation de longueur séparant l'articulation du point de concours de l'axe AA' avec l'axe Δ, l'articulation 15 se déplaçant vers la droite lorsque ledit point de concours se déplace vers la gauche et vice-versa. Ce point de concours reste donc fixé au point 4 lequel bien entendu est lié au déplacement, imposé par le programme, du chariot 5.

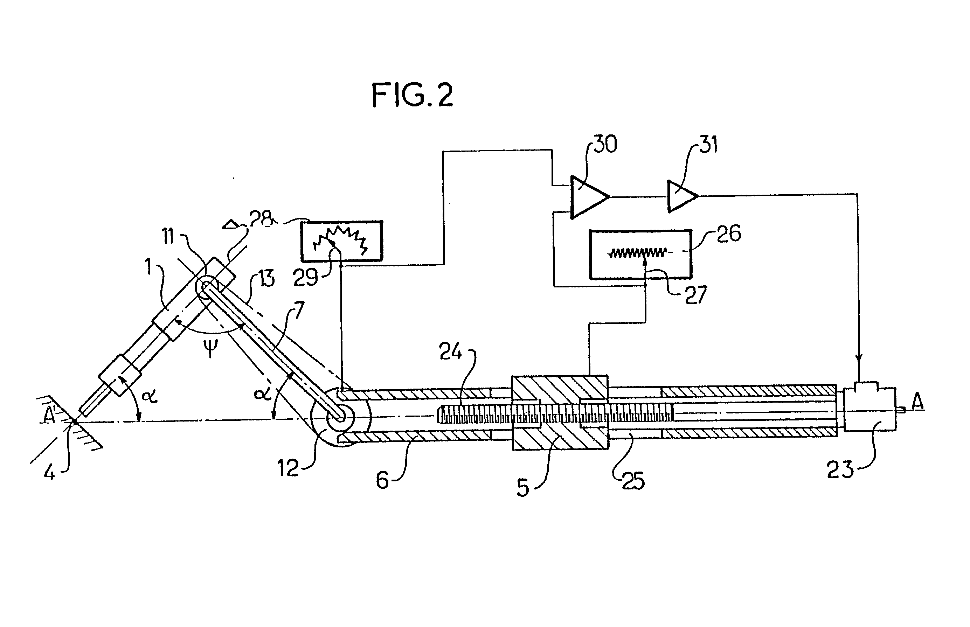

Sur la figure 2, les moyens pour translater la poutre 6 sont différents. Ils comprennent un moteur 23 solidaire de la poutre 6 et dont l'arbre de sortie est constitué par une tige filetée 24 vissée dans le chariot 5 servant d'écrou. La poutre 6 possède une fente 25 pour le passage du chariot et permettre la translation relative de la poutre par rapport au chariot. Le fonctionnement du moteur est asservi à la variation de l'angle α. Dans cet exemple la variation de l'angle α est réalisé par un moteur non représenté agissant sur la bielle 7.

Le dispositif d'asservissement comprend un premier potentiomètre 26 dont la tension recueillie sur le curseur 27, lié au déplacement relatif de la poutre par rapport au chariot, varie linéairement, un deuxième potentiomètre 28 dont la tension recueillie sur le curseur 29, lié à la rotation de la bielle 7, varie comme le cosinus de l'angle α. Un comparateur 30 reçoit en entrée les tensions des deux potentiomètres et la sortie est reliée à un amplificateur 31 dont la sortie commande le moteur 23.

On peut prévoir aussi une rotation de l'outil autour de l'axe Δ ainsi qu'une translation le long de cet axe. De même, on peut prévoir une rotation de la poutre 6 autour de l'axe AA' par le moyen d'un système mécanique connu, contenu dans le chariot 5.

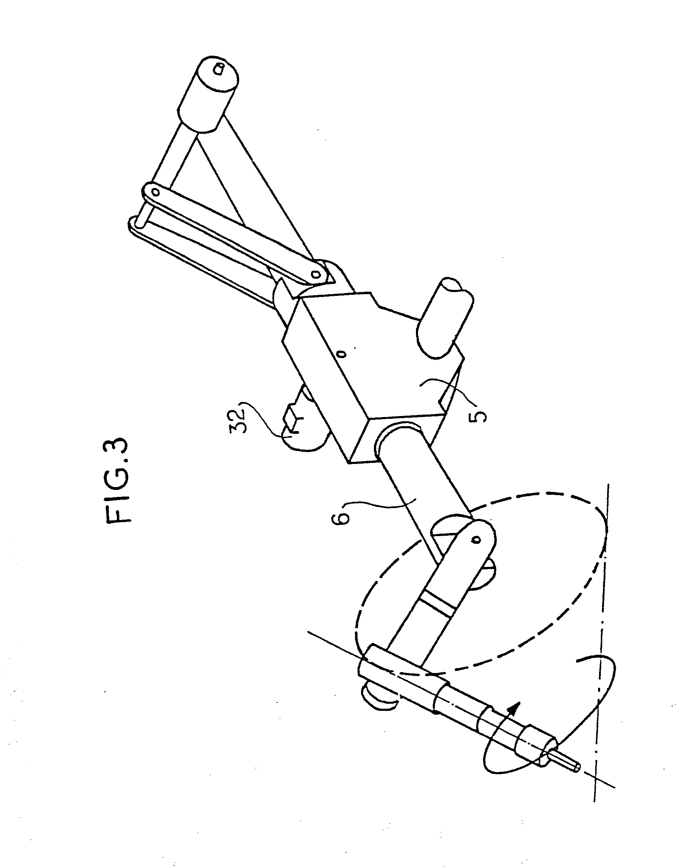

La figure 3 montre une perspective montrant un tel dispositif dans lequel la rotation autour de l'axe AA' est commandé par un moteur 32 qui agit sur un système mécanique contenu dans le chariot 5 et qui permet la rotation de l'extrémité gauche de la poutre 6.

**Revendications**

1. Dispositif d'orientation d'un outil (2), comportant un support (5), un bras orientable (1) supportant l'outil avec une poutre (6) mobile en translation rectiligne le long d'un axe (A—A') par rapport au support (5) et supportant une bielle (70) articulée par une extrémité à une extrémité de ladite poutre (6) et par son autre extrémité audit bras (1), des moyens permettant de faire varier l'angle α entre la bielle (7) et l'axe (A—A') de translation, et des moyens (14, 17, 20, 21, 22) pour déplacer ladite poutre (6) par rapport audit support, caractérisé en ce que l'axe du bras orientable (1) reste en permanence dans le plan défini par la bielle (7) et l'axe (A—A'), de sorte que la seule possibilité de mouvement du bras orientable est un pivotement autour de l'axe passant par le point d'intersection de l'axe (Δ) du bras orientable (1) et l'axe de la bielle (7) et perpendiculaire à ces deux axes, qu'il existe des moyens (11, 12, 13) permettant de faire varier l'angle (ψ) entre la bielle (7) et le bras orientable (1) de façon qu'il reste égal à $\pi-2\alpha$, et que les moyens (14, 17, 20, 21, 22) de déplacement de la poutre (6) permettent le déplacement de celle-ci d'un vecteur opposé à celui dont s'est déplacé le point d'intersection de l'axe (Δ) du bras orientable avec l'axe (A—A') de translation de la poutre (6) lors d'une variation de l'angle α.

2. Dispositif d'orientation d'un outil selon la revendication 1, caractérisé en ce que les moyens permettant de faire varier l'angle ψ de façon qu'il reste égal à $\pi-2\alpha$ comportent un premier pignon (11) de rayon R situé coaxialement à l'articulation de la bielle avec le bras orientable et fixe par rapport au bras orientable, un second pignon (12) de rayon 2R situé coaxialement à l'articulation de la bielle avec la poutre et fixe par rapport à la poutre, une chaîne de transmission (13) entourant les deux pignons.

3. Dispositif d'orientation d'un outil selon l'une des revendications 1 ou 2, caractérisé en ce que les moyens pour déplacer ladite poutre par rapport au chariot lorsque l'angle α varie comportent une première biellette (14) comprenant un premier axe d'articulation (15) et un second axe d'articulation (16), la distance séparant ces deux axes d'articulation étant égale à la distance séparant les axes d'articulation de ladite bielle (7), une deuxième biellette (17) comprenant un premier axe d'articulation et un deuxième axe d'articulation, la distance séparant ces deux axes étant égale à la distance séparant les deux axes d'articulation de la première biellette, la première articulation de la première biellette étant articulée à ladite poutre au voisinage de la seconde extrémité (19), la deuxième articulation de la première biellette étant articulée à la première articulation de la seconde biellette et la deuxième articulation de la seconde biellette étant articulée audit chariot, un troisième pignon (20) de rayon R1 coaxial à la première articulation de la première biellette et fixe par rapport à cette première biellette, un quatrième pignon (21) de rayon R1 coaxial à l'articulation de la bielle avec la poutre et fixe par rapport à la bielle, et une chaîne de transmission (22) entourant les troisième et quatrième pignons, la bielle et la première biellette étant réglées parallèlement.

4. Dispositif d'orientation d'un outil selon la revendication 3, caractérisé en ce que lesdits moyens permettant de faire varier l'angle α comportent un moteur agissant sur la première biellette de façon à la faire pivoter autour de son premier axe d'articulation.

5. Dispositif d'orientation d'un outil selon l'une des revendications 1, 2 ou 3, caractérisé en ce que lesdits moyens permettant de faire varier l'angle α comportent un moteur agissant sur ladite bielle (7) de façon à la faire pivoter autour de son articulation avec ladite poutre.

6. Dispositif d'orientation d'un outil selon l'une des revendications 1, 2 ou 5, caractérisé en ce que les moyens pour déplacer ladite poutre par rapport au chariot lorsque l'angle α varie comportent un moteur (23) et des moyens (5, 24) de transmission de façon que la rotation de l'arbre du moteur entraîne une translation de la poutre par rapport au chariot et des moyens de commande du moteur asservissant sa rotation en fonction de la variation de l'angle α.

7. Dispositif d'orientation d'un outil selon la revendication 6, caractérisé en ce que lesdits moyens de commande comportent un premier potentiomètre dont la tension recueillie sur un curseur (27), lié au déplacement de la poutre par rapport au chariot, varie linéairement en fonction du déplacement du curseur, un deuxième potentiomètre (28) dont la tension recueille sur un curseur (29), lié à la rotation de la bielle par rapport à la poutre varie comme le cosinus de l'angle α, un comparateur (30) recevant les signaux du premier et du deuxième potentiomètre dont la sortie est amplifiée et commande le moteur (23).

## Patentansprüche

1. Vorrichtung zum Ausrichten eines Werkzeugs (2), mit einem Träger (5), einem das Werkzeug tragenden ausrichtbaren Arm (1), mit einem geradlinig entlang einer Achse (A—A') in bezug auf den Träger (5) verscheibbaren Balken (6), der eine Stange (7) trägt, die mit einem Ende an einem Ende des Balkens (6) und mit dem anderen Ende am Arm (1) gelenkig befestigt ist, mit Mitteln, die eine Veränderung des Winkels α zwischen der Stange (7) und der Translationsachse (A—A') ermöglichen, und mit Mitteln (14, 17, 20, 21, 22), um den Balken in bezug auf den Träger zu verschieben, dadurch gekennzeichnet, daß die Achse des Ausrichtbaren Arms (1) ständig in der von der Stange (7) und der Achse (A—A') definierten Ebene bleibt, so daß die einzige Bewegungsmöglichkeit des ausrichtbaren Arms eine Schwenkung um die durch den Schnittpunkt der Achse (Δ) des ausrichtbaren Arms (1) und der Achse der Stange (7) verlaufende und senkrecht zu diesen beiden Achsen stehende Achse ist, daß es Mittel (11, 12, 13) gibt, die es ermöglichen, den Winkel (ψ) zwischen der Stange (7) und dem ausrichtbaren Arm (1) so zu verändern, daß er gleich π−2α bleibt, und daß die Mittel (14, 17, 20, 21, 22) zum Verschieben des Balkens (6) die Verschiebung des letzteren um einen Vektor ermöglichen, der dem entgegengesetzt ist, um den sich der Schnittpunkt der Achse (Δ) des ausrichtbaren Arms mit der Translationsachse (A—A') des Balkens (6) bei einer Veränderung des Winkels α verschiebt.

2. Vorrichtung zum Ausrichten eines Werkzeugs nach Anspruch 1, dadurch gekennzeichnet, daß die Mittel, die eine Veränderung des Winkels ψ derart ermöglichen, daß er gleich π−2α bleibt, ein Zahnrad (11) mit dem Radius R aufweisen, das koaxial zum Gelenk der Stange mit dem ausrichbaren Arm und fest in bezug auf den ausrichtbaren Arm angeordnet ist, sowie ein zweites Zahnrad (12) mit dem Radius 2R, das koaxial zum Gelenk der Stange am Balken und fest in bezug auf den Balken angeordnet ist, wobei eine Übertragungskette (13) über die beiden Zahnräder läuft.

3. Vorrichtung zum Ausrichten eines Werkzeugs nach einem der Ansprüche 1 und 2, dadurch gekennzeichnet, daß die Mittel zur Verschiebung des Balkens in bezug auf den Wagen, wenn der Winkel α sich verändert, einen ersten Hebel (14) mit einer ersten Gelenkachse (15) und einer zweiten Gelenkachse (16), wobei der diese beiden Gelenkachsen trennende Abstand gleich dem Abstand zwischen den Gelenkachsen der Stange (7) ist, einen zweiten Hebel (17) mit einer ersten Gelenkachse und einer zweiten Gelenkachse, wobei der diese beiden Achsen trennende Abstand gleich dem die beiden Gelenkachsen des ersten Hebels trennenden Abstand ist und wobei das erste Gelenk des ersten Hebels an den Balken in der Nähe des zweiten Endes (19) angelenkt ist, das zweite Gelenk des ersten Hebels an das erste Gelenk des zweiten Hebels angelenkt ist und das zweite Gelenk des zweiten Hebels an den Wagen angelenkt ist, ein drittes Zahnrad (20) mit dem Radius R1, koaxial zum ersten Gelenk des ersten Hebels und fest in bezug auf diesen ersten Hebel, ein viertes Zahnrad (21) mit dem Radius R1, koaxial zum Gelenk der Stange mit dem Balken und fest in bezug auf die Stange, und eine Übertragungskette (22) aufweisen, die über das dritte und vierte Zahnrad umläuft, wobei die Stange und der erste Hebel parallel gesteuert sind.

4. Vorrichtung zum Ausrichten eines Werkzeugs nach Anspruch 3, dadurch gekennzeichnet, daß die Mittel, die eine Veränderung des Winkels α

ermöglichen, einen Motor aufweisen, der auf den ersten Hebel derart einwirkt, daß dieser sich um seine erste Gelenkachse dreht.

5. Vorrichtung zum Ausrichten eines Werkzeugs nach einem der Ansprüche 1, 2 oder 3, dadurch gekennzeichnet, daß die Mittel, die eine Veränderung des Winkels α ermöglichen, einen Motor aufweisen, der auf die Stange (7) so einwirkt, daß diese sich um ihr Gelenk mit dem Balken dreht.

6. Vorrichtung zum Ausrichten eines Werkzeugs nach einem der Ansprüche 1, 2 oder 5, dadurch gekennzeichnet, daß die Mittel zum Verschieben des Balkens in bezug auf den Wagen, wenn der Winkel α sich ändert, einen Motor (23) und Übertragungsmittel (5, 24), so daß die Drehung de Motorwelle eine Verschiebung des Balkens in bezug auf den Wagen bewirkt, und Mittel zur Steuerung des Motors aufweisen, die eine Drehung in Abhängigkeit von der Veränderung des Winkels α regeln.

7. Vorrichtung zum Ausrichten eines Werkzeugs nach Anspruch 6, dadurch gekennzeichnet, daß die Steuermittel ein ersten Potentiometer (26), dessen an einem Läufer (27), der mit der Verschiebung des Balkens in bezug auf den Wagen verbunden ist, abgreifbare Spannung sich linear in Abhängigkeit von der Verschiebung des Läufers ändert, ein zweites Potentiometer (28), dessen an einem Läufer (29), der mit der Schwenkung der Stange in bezug auf den Balken verbunden ist, abgreifbare Spannung sich wie der Kosinus des Winkels α ändert, und einen Komparator (30) aufweisen, der die Signale des ersten und des zweiten Potentiometers empfängt und dessen Ausgang verstärkt wird und den Motor (23) steuert.

**Claims**

1. A tool (2) orientation device, comprising a support (5), an adjustable arm (1) supporting the tool, with the beam (6) which is mobile in rectilinear translation along an axis (A—A') with respect to the support and which supports a bar (7) coupled through an articulation at one end to the end of said beam (6) and through an articulation at its other end to said arm (1), means permitting to vary the angle α between the bar (7) and the translation axis (A—A'), and means (14, 17, 20, 21, 22) for moving said bar (6) with respect to said support, characterized in that the axis of the adjustable arm (1) remains permanently in the plane defined by the bar (7) and the axis (A—A'), so that the only possibility of movement of the adjustable arm is a swing around the axis passing through the intersection point of the axis (Δ) of the adjustable arm (1) and the axis of the bar (7) and perpendicular to these two axes, that there are means (11, 12, 13) permitting the variation of the angle (ψ) between the bar (7) and the adjustable arm (1) so that it remains equal to π−2α, and that the means (14, 17, 20, 21, 22) for moving the beam (6) permit the movement of the latter along a vector opposed to that by which the intersection point of the axis (Δ) of the adjustable arm with the axis (A—A') of translation of the beam (6) has moved during a variation of the angle α.

2. A tool orientation device according to claim 1, characterized in that the means permitting to vary the angle ψ so that it remains equal to π−2α comprise a first gear wheel (11) of the radius R situated coaxially to the articulation of the bar with the adjustable arm and fixed with respect to the adjustable arm, a second gear wheel (12) of the radius 2R situated coaxially to the articulation of the bar with the beam and fixed with respect to the beam, and a transmission chain (13) surrounding the two gear wheels.

3. A tool orientation device according to one of the claims 1 or 2, characterized in that the means for moving said beam with respect to the carriage when the angle α varies, comprise a first lever (14) having a first articulation axis (15) and a second articulation axis (16), the distance between these two articulation axes being equal to the distance between the articulation axes of said bar (7), a second lever (17) having a first articulation axis and a second articulation axis, the distance between these two axes being equal to the distance between the two articulation axes of the first lever, the first articulation of the first lever being coupled to said beam in the vicinity of the second end (19), the second articulation of the first lever being coupled to the first articulation of the second lever and the second articulation of the second lever being coupled to said carriage, a third gear wheel (20), of the radius R1, coaxial to the first articulation of the first lever and fixed with respect to said first lever, a fourth gear wheel (21), of the radius R1, coaxial to the articulation of the lever with the beam and fixed with respect to the bar, and a transmission chain (22) surrounding the third and fourth gear wheel, the bar and the first lever being commanded in order to remain parallel.

4. A tool orientation device according to claim 3, characterized in that said means permitting the variation of the angle α comprise a motor acting in the first lever so as to make it swing around its first articulation axis.

5. A tool orientation device according to one of the claims 1, 2 or 3, characterized in that said means permitting the variation of the angle α comprise a motor acting on the said bar (7) so as to make it swing around its articulation with said beam.

6. A tool orientation device according to one of claims 1, 2 or 5, characterized in that the means for moving said beam with respect to the carriage when the angle α varies, comprise a motor (23) and transmission means (5, 24), so that the rotation of the shaft of the motor causes a translation of the beam with respect to the carriage, and control means for the motor regulating its rotation as a function of the variation of the angle α.

7. A tool orientation device according to claim 6, characterized in that said control means comprise a first potentiometer (26), the voltage of which, tapped on a cursor which is connected to the movement of the beam with respect to the carriage, varies linearily as a function of the cursor movement, a second potentiometer (28), the voltage of which, tapped on a cursor (29) which is connected to the rotation of the bar with respect to the beam, varies according to the cosinus of the angle α, a comparator (30) receiving the signals of the first and the second potentiometers, the output of which is amplified and controls the motor (23).

# FIG.1

0 061 155

# FIG.2

FIG.3

32

6

5